# EUROPEAN PATENT SPECIFICATION

(11) **EP 3 300 582 B1**
(45) Date of publication and mention of the grant of the patent: **09.10.2019**
(21) Application number: 17185491.2
(22) Date of filing: 09.08.2017
(51) Int. Cl.: A01D 43/08

(54) **AGRICULTURAL WORKING MACHINE**
LANDWIRTSCHAFTLICHE ARBEITSMASCHINE
MACHINE DE TRAVAIL AGRICOLE

(30) Priority: 30.09.2016 DE 102016118674
(43) Date of publication of application: 04.04.2018
(73) Proprietor: CLAAS E-Systems GmbH, 49201 Dissen am Teutoburger Wald (DE)
(72) Inventor: Kirchbeck, Alexander, 18137 Drensteinfurt (DE); Hartmann, Ralf, 49324 Melle (DE); Lysgaard Andersen, Gert, 3450 Alleroed (DK); Kirk, Kristian, 2100 Koebenhavn (DK); Lahmann, Dirk, 33790 Halle/Westf. (DE); Lisouski, Pavel, 2720 Vanlose (DK); Vilander, Jespe, 3480 FREDENSBORG (DK)
(74) Representative: Budach, Steffen

(56) References cited:
- EP-A2- 1 219 153
- EP-B1- 2 020 174
- WO-A2-2015/011237
- DE-A1-102010 004 648

## Description

The invention is directed to an agricultural working machine according to the general part of claim 1.

The agricultural working machine in question comprises a spout for conveying harvested crops forming a crop flow to a transport container, preferably of a transport vehicle, in a transfer process.

It is a challenging task to constantly align the spout such that the crop flow does not miss the transport container and that the transport container is filled evenly. This is particularly true for the case that the agricultural working machine is a self-propelled harvester, especially a forage harvester or a combine harvester, and the transport container is arranged on a trailer which is pulled by a tractor forming the transport vehicle.

From DE 10 2010 004 648 A1 a forage harvester is known, where a horizontal angle of the crop flow can be adjusted and a sidewise angel of the crop flow can be adjusted in order to switch between two transport containers. Any support relieving the operator of controlling the angels is not disclosed.

Another known agricultural working machine (EP 2 020 174 B1), which is the starting point for the invention, comprises an operator assistance system which is designed for generating position control signals for the position control of the spout and/or the transport vehicle and/or the agricultural working machine in order to automatically guide the crop flow in the transport container. For this a sensor is provided, which detects characteristic parameters of the spout and the characteristic parameters of the transport vehicle and the characteristic parameters of the agricultural working machine.

In order to achieve an equal distribution of the crops in the transport container along the drive direction of the agricultural working machine during a side-by-side transfer process either the relative speeds of the agricultural working machine and/or the transport vehicle have continuously to be altered or the spout has to be pivoted. The reaction time for these regulation variables is relatively high. Furthermore the energy consumption and power demand for pivoting the spout and/or changing the speed of the agricultural working machine and/or transport vehicle is also relatively high.

It is therefore the object of the invention to improve the known agricultural working machine such that a better distribution of the crops in the transport container can be achieved and that the energy consumption and/or power demand for the transfer process can be reduced.

The above noted object is solved for an agricultural working machine according to the general part of claim 1 by the features of the characterizing part of claim 1.

It has been found, that the distribution of the crops in the transport container can be improved during a side-by-side transfer process of the agricultural working machine and the transport container, preferably of a transport vehicle, when the deflection mechanism may be controlled by the operator assistance system such that for distribution of the crops in the transport container along the drive direction of the agricultural working machine the change in flow direction may comprise a deflection component in drive direction of the agricultural working machine. The better distribution is achieved because the flow direction of the crop flow can more dynamically be adapted by the deflection mechanism than by pivoting the whole spout and/or changing the speed of the agricultural working machine and/or transport vehicle. Thus the overall transfer process can be better controlled with this additionally controlling variable provided by the deflection mechanism. Furthermore for adjusting at least part of the outlet mouth much less power and/or energy is required than for pivoting the spout as well as changing the speed of the agricultural working machine and/or transport vehicle.

According to claim 2 it is proposed that the deflection mechanism may be controlled by an operator assistance system such that for distribution of the crops in a transport container laterally to the drive direction of the agricultural working machine the change in flow direction may comprise a deflection component lateral to the drive direction of the agricultural working machine. With lateral respectively laterally preferred perpendicular is meant. This allows also a more even distribution of the crops in perpendicular direction of the drive direction of the agricultural working machine.

In a further preferred embodiment according to claim 3 it is proposed that in order to realize the deflection component in the drive direction the actuator arrangement of the deflection mechanism adjusts at least part of the outlet mouth sidewise with respect to a vertical plane. Where preferably the vertical plane is aligned with the crop flow in the spout prior entering the deflection mechanism and/or the vertical plane is formed by a pivot axis of the spout and the longitudinal extension of the spout. Through this the deflection mechanism can be realized in a simple construction.

Additionally and/or alternatively, it is proposed according to claim 4 that in order to realize the deflection component lateral to the drive direction the actuator arrangement of the deflection mechanism adjusts at least part of the outlet mouth up or down with respect to a horizontal plane. This also allows a deflection lateral to the drive direction in a simple manner.

Accordingly, in order to realize both deflection components the actuator arrangement of the deflection mechanism adjusts preferably at least part of the outlet mouth both sidewise and up or down.

Further preferred embodiments of the deflection mechanism and its function are described in claim 6.

According to claim 7 the spout is pivotable and the pivoting of the spout is controllable by the operator assistance system during the transfer process. This additional variable increases the flexibility for adjusting the outlet mouth.

In claims 8 and 9 preferred embodiments for a sensor arrangement for detection of characteristic parameters of the transport container and/or transport vehicle are described. This allows further to improve the automated transfer process.

For further improvement in the transfer process the pivoting of the spout and the adjusting of the mouth by the actuator arrangement of the deflection mechanism is preferably synchronized by the operator assistance system during the transfer process.

If, as proposed by claim 11, the travel speed of the agricultural working machine and/or the transport vehicle is controllable by the operator assistance system during the transfer process these variables can be additionally controlled respectively changed by the operator assistance system to further improve the transfer process.

For example according to claim 12 it is possible to synchronize the pivoting of the spout and the adjustment of the outlet mouth by the actuator arrangement of the deflection mechanism by the operator assistance system during the transfer process together with the travel speed of the agricultural working machine and/or the transport vehicle.

To further improve the synchronization during the transfer process additionally the steering of the agricultural working machine and/or the transport vehicle may be synchronized by the operator assistance system as well.

The agricultural working machine may be a harvester, especially a forage harvester or a combine harvester, as claimed in claim 13. Especially for combine harvesters the proposed design is extraordinary beneficial since the need to pivot the spout can be decreased and the spout of the combine harvesters is usually extraordinary heavy because of the integrated screw conveyer.

Finally the above described problem is solved by the method of claim 14. The same advantages as explained above are achieved by this method. The agricultural working machine may be designed as described and the method may comprise the steps described in conjunction with the agricultural working machine.

The following preferred embodiment of the invention will be described with reference to the drawings. In the drawings
- Fig. 1: shows an agricultural working machine according to the invention in a transfer process with a transport vehicle in a top view
- Fig. 2: shows a) a three dimensional perspective view of the distal end of the spout with the deflection mechanism and b) a different view of the distal end of the spout with the deflection mechanism
- Fig.3: shows another preferred embodiment of the deflection mechanism in a three dimensional perspective view.

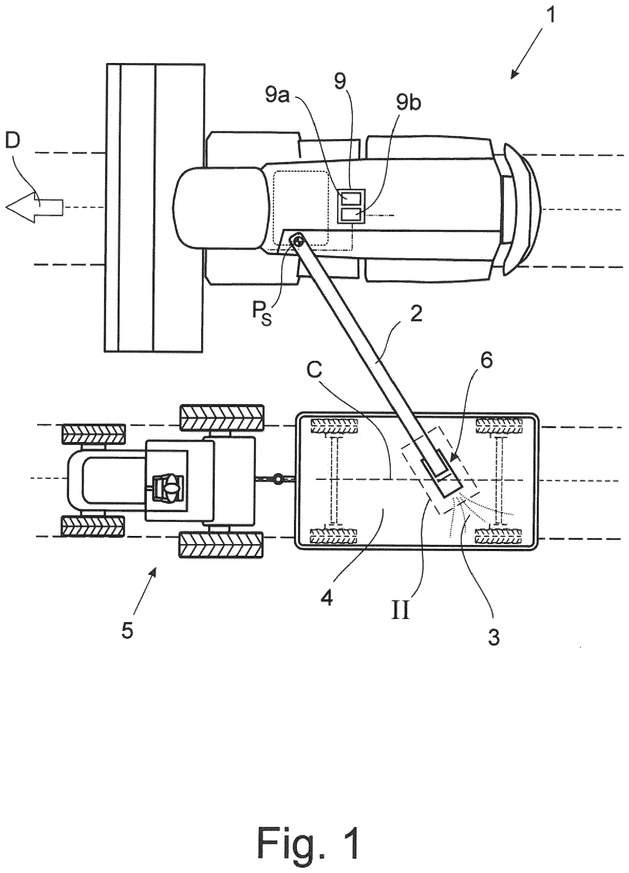

Fig. 1 shows an agricultural working machine 1 according to the invention. It comprises a spout 2 for conveying harvested crops forming a crop flow 3 to the transport container 4, preferably of a transport vehicle 5, in a transfer process. The agricultural working machine 1 and the transport vehicle 5 form a system for transferring crops from the agricultural working machine 1 to the transport vehicle 5. Here the transport vehicle 5 is a trailer combination of a tractor and a trailer carrying the transport container 4. Both, the agricultural working machine 1 and the transport vehicle 5 drive here and preferably side-by-side in substantially the same direction during the transfer process.

It may be noted, that the proposed agricultural working machine 1 may be of various designs. For example the proposed agricultural working machine 1 may be a forage harvester or a combine harvester. While those agricultural working machines 1 are self-propelled machines, the invention may well be applicable to an agricultural working machine 1 which is being pulled by a tractor or the like.

The spout 2 comprises at its distal end a deflection mechanism 5 forming an outlet mouth 7 for the crop flow 3. The deflection mechanism 6 comprises an actuator arrangement 8 for adjusting at least part of the outlet mouth 7 in order to change the flow direction F₁, F₂ of the crop flow 3 by deflection.

The agricultural working machine 1 of the invention further comprises an operator assistance system 9 which controls the deflection mechanism 6. It is proposed that the deflection mechanism 6 is configured to be controlled by the operator assistance system 9 such that for distribution of the crops in the transport container 4 along the drive direction of the agricultural working machine 1 during a side-by-side transfer process of the agricultural working machine 1 and the transport container 5 the change in flow direction F₁, F₂ may comprise a deflection component D_{D} in drive direction D of the agricultural working machine 1.

Further preferred is that the deflection mechanism 6 is configured to be controlled by the operator assistance system 9 such that for distribution of the crops in the transport container 4 laterally to the drive direction of the agricultural working machine 1 the change in flow direction F₁, F₂ may comprise a deflection component D_{L} lateral to the drive direction of the agricultural working machine 1. If this is the case, a good distribution of the crops can be achieved in the transport container 4.

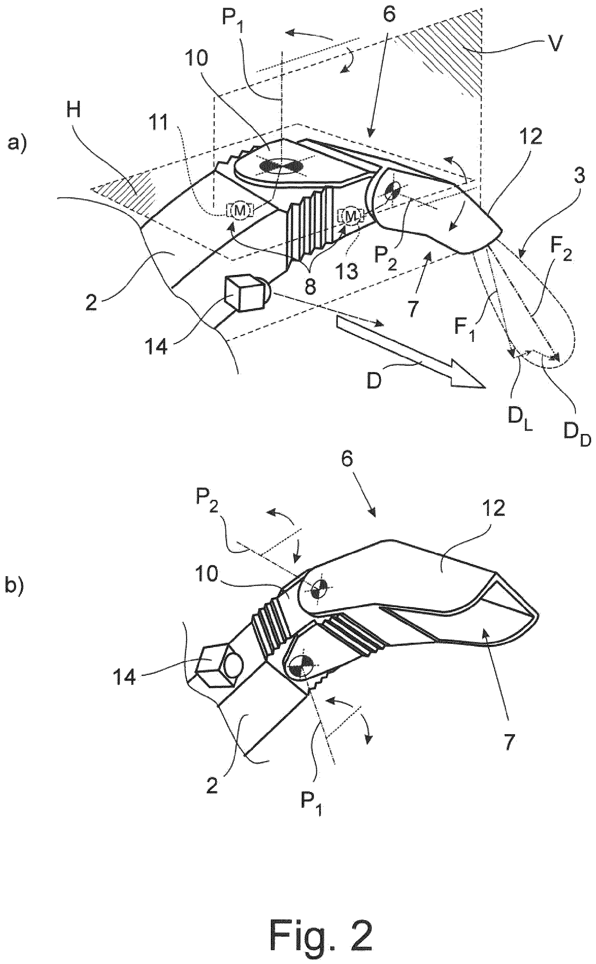

This can be seen in Figure 2a), where a first flow direction F₁ of the crop flow 3 prior to a flow change is shown and a second flow direction F₂ of the crop flow 3 is shown as well as the deflection component D_{D} in drive direction D and the deflection component D_{L} lateral to the drive direction D.

Preferably the deflection component D_{D} in the drive direction D can be realized in different ways. Preferably, in order to realize the deflection component D_{D} in the drive direction D the actuator arrangement 8 of the deflection mechanism 6 adjusts at least part of the outlet mouth 7 sidewise with respect to a vertical plane V. The vertical plane V is preferably aligned with the crop flow 3 in the spout 2 prior entering the deflection mechanism 6. This is shown in Fig. 2. Additionally or alternatively the vertical plane V may be formed by a pivot axis P_{S} of the spout 2 and the longitudinal extension of the spout 2. This can be seen in Fig. 1.

In order to realize the deflection component D_{L} lateral to the drive direction D the actuator arrangement 8 of the deflection mechanism adjusts at least part of the outlet mouth 7 up or down with respect to horizontal plane H. The actuator 11, 13 respectively actuators 11, 13 of the actuator arrangement 8 may for example be hydraulic and/or pneumatic cylinders and/or hydraulic and/or electric motors.

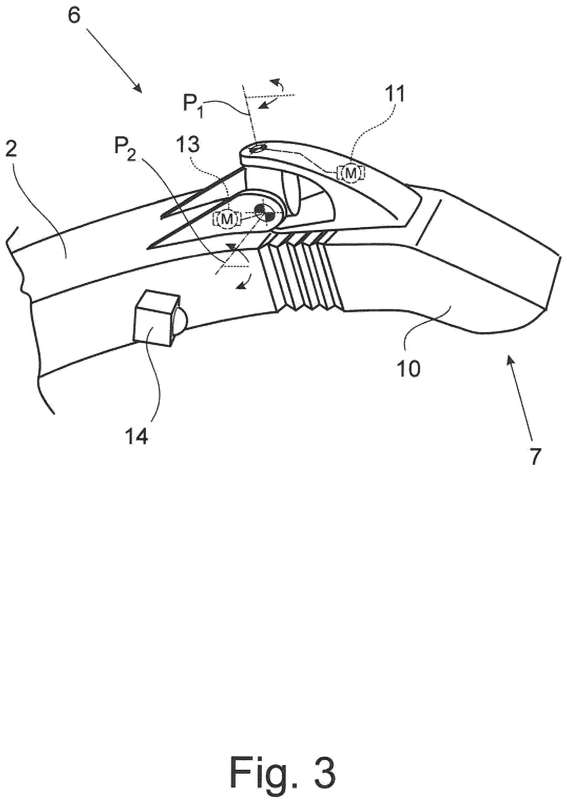

In order to realize both deflection components D_{D}, D_{L} the actuator arrangement 8 of the deflection mechanism 6 adjusts at least part of the outlet mouth 7 both sidewise and up or down. Preferred designs of of the deflection mechanism 6 are shown in Fig. 2 and Fig. 3. The deflection mechanism 6 of both embodiments comprises besides the actuator arrangement 8 a first deflection unit 10.

In the embodiment of Fig. 2 the first deflection unit 10 can be adjusted by actuator 11 of the actuator arrangement 8. Here and preferably the deflection mechanism 6 comprises further a second deflection unit 12. This deflection unit 12 can be adjusted by an actuator 13. Here these two deflection units 10, 11 are arranged sequentially at the end of the spout 2. They are as described before adjustable by the actuator arrangement 8. In this way at least part of the outlet mouth 7 is adjustable in order to change the flow direction F₁, F₂ of the crop flow 3 by deflection. In the figures the second deflection unit 12 is designed as spout flap. Also both deflection units may be substantially designed as spout flaps.

Here and preferably the first deflection unit 10 is adjustable around a pivot axis P₁ by the actuator 11 and the second deflection unit 12 is adjustable around a pivot axis P₂. The adjustment range of the first deflection unit 10 and/or of the second deflection unit 12 may be predefined.

The pivot axis P₁ of the first deflection unit 10 and the pivot axis P₂ of the second deflection unit 12 are may be displaced to each other as shown in the embodiment of Fig. 2.

In the embodiment of Fig. 3 the deflection mechanism 6 comprises a, preferably only a, first deflection unit 10. It may be designed as spout flap. It is here and preferably adjustable by the actuator arrangement 8. For adjusting the first deflection unit 10 the actuator arrangement 8 may comprise at least one or two actuators 11, 13.

In this embodiment the first deflection unit 10 is adjustable around a first pivot axis P₁ and around a second pivot axis P₂. Here the pivot axes P₁ and P₂ may cross each other, as shown in Fig. 3. In another not shown embodiment the distance of the pivot axes P₁ and P₂ may be preferably less then 30cm, preferably less then 10cm, further preferably less then 5cm. If the pivot axes P₁, P₂ cross each other or are arranged close to each other the crop flow 3 can be better adjusted by the deflection mechanism 6.

In both embodiments the angle between those two pivot axes P₁, P₂ is preferably between 60 degrees and 120 degrees, further preferably between 75 degrees and 115 degrees, further preferably substantially 90 degrees. One pivot axis P₁, P₂ of the deflection mechanism 6 may be substantially horizontal. A second pivot axis P₁, P₂ may be substantially vertical.

Besides pivot sidewise adjustments of at least part of the outlet mouth 7 with respect to the vertical plane also different adjustments are possible. For example outlet mouth 7 of the deflection mechanism 6 is configured to be adjustable on a, preferably predetermined, curved track. During the transfer process the crop flow 3 is preferably guided by the outlet mouth 7 controlled by the operator assistance system 9 in an alternating manner around a center line, which center line C is preferably extending along the drive direction D of the agricultural working machine 1. Most preferably the outlet mouth 7 is guided according to a filling strategy stored in the memory 9a of the operator assistance system 9.

The previously described adjustments of the outlet mouth 7 are preferably at least partly, preferably automatically controlled by the operator assistance system 9 during the transfer process. It is also conceivable that the starting of the transfer process is triggered by an operator of the agricultural working machine 1 and/or the transport vehicle 2 and the transfer process is afterwards automatically controlled by the operator assistance system 9.

The operator assistance system 9 preferably has a memory 9a and a processing unit 9b. Preferably in the memory 9a different filling strategies for at least the transport container are stored. Alternately or additionally known kinematics of the agricultural working machine 1 as well as the transport vehicle 5, especially the transport container 4, may be stored. Based on these the operator assistance system 9 may control the transfer process automatically using its processing unit 9b.

After the deflection mechanism 6 has been described it may be noted, that the spout 2 is preferably pivotable, especially vertically and/or horizontally pivotable, and that the pivoting of the spout 2 is controllable by the operator assistance system 9 during the transfer process. The spout 2 may comprise one or more actuators for the pivoting.

Furthermore the agricultural working machine 1 may comprise a sensor arrangement 14 for detection of characteristic parameters of the transport vehicle 5. The sensor arrangement 14 may additionally detect characteristic parameters of the agricultural working machine 1 and/or especially characteristic parameters of the spout 2. These characteristic parameters can be for example the dimensions of the opening of the transport container 4 or the relative position of the crop flow or the outlet mouth 7 and the opening of the transport container 4. Further characteristic parameters are described in and it is referred to EP 2 020 174 B1. The sensor arrangement 14 is as shown in Fig. 2 preferably mounted to the spout 2, especially to the deflection mechanism 6. It is arranged such that it focuses at least part of the opening of the transport container 4 during the transfer process.

The sensor arrangement 14 may comprise or be a stereo camera and/or a photonic mixer device, preferably a time-of-flight sensor, and/or a panorama image camera and/or an infrared scanner and/or a laser scanner.

Based on the detection of the sensor arrangement 14 the operator assistance system 9 controls the transfer process preferably automatically. Especially the operator assistance system 9 is configured to control the pivoting of the spout 2 and the adjustment of the outlet mouth 7 by the actuator arrangement 8 of the deflection mechanism 6 during the transfer process. This leads to better distributed crops in the transport containers 4 and may reduce the power demand respectively fuel consumption needed for performing the transfer process.

To further optimize this, the travel speed of the agricultural working machine 1 and/or the transport vehicle 5 is configured be controllable by the operator assistance system 9 during the transfer process as well. Given this, the operator assistance system 9 may be configured to synchronize the pivoting of the spout 2 and the adjustment of the outlet mouth 7 by the actuator arrangement 8 of the deflection mechanism 6 together with the travel speed of the agricultural working machine 1 and/or the transport vehicle 5. Thus the transfer process can be further optimized especially regarding power demand respectively fuel consumption and distribution of the crops in the transport container.

In an even more advanced example the operator assistance system 9 may control also the steering of the agricultural working machine 1 and/or the transport vehicle 5 and further synchronize the steering of the agricultural working machine 1 and/or the transport vehicle 5 with the pre-described synchronizations.

Especially in case that the agricultural working machine 1 is a forage harvester it may comprise a cutting drum for processing of the crops and a downstream accelerator for accelerating the crops. In the preferred embodiment the agricultural working machine 1 is a combine harvester comprising a trashing unit for trashing the harvested crops prior storing them into a crop tank. Additionally or alternatively the agricultural working machine 1 may comprise a screw conveyer for transporting the crops through the spout 2.

It finally may be noted, that all the prescribed adjustments are possible in a standard configuration of the agricultural vehicle without any height adjustments of an adaptive chassis of the agricultural working machine 1.

### Reference numbers

- 1: agricultural working machine
- 2: spout
- 3: crop flow
- 4: transport container
- 5: transport vehicle
- 6: deflection mechanism
- 7: outlet mouth
- 8: actuator arrangement
- 9: operator assistance system
- 9a: memory
- 9b: processing unit
- 10: deflection unit
- 11: actuator
- 12: deflection unit
- 13: actuator
- 14: sensor arrangement
- C: center line
- D: drive direction
- D_{D}: deflection component in drive direction
- D_{L}: deflection component lateral to drive direction
- F₁: flow direction
- F₂: flow direction
- P₁: pivot axis
- P₂: pivot axis
- P_{S}: spout
- V: vertical plane
- H: horizontal plane

## Claims

1. An agricultural working machine comprising a spout (2) for conveying harvested crops forming a crop flow (3) to a transport container (4), preferably of a transport vehicle (5), in a transfer process, wherein the spout (2) comprises at his distal end a deflection mechanism (6) forming an outlet mouth (7) for the crop flow (3) and wherein the deflection mechanism (6) comprises an actuator arrangement (8) for adjusting at least part of the outlet mouth (7) in order to change the flow direction (F₁, F₂) of the crop flow by deflection and wherein the agricultural working machine (1) further comprises an operator assistance system (9), which controls the deflection mechanism (6),
wherein the deflection mechanism (6) is controlled by the operator assistance system (9) such that for distribution of the crops in the transport container (4) along the drive direction (D) of the agricultural working machine (1) during a side-by-side transfer process of the agricultural working machine (1) and the transport container (4) the change in flow direction (F₁, F₂) comprises a deflection component (D_{D}) in drive direction of the agricultural working machine (1), **characterized in that** the deflection mechanism (6) comprises a first deflection unit (10) and a second deflection unit (12) which are arranged sequentially at the end of the spout (2) and which are adjustable by the actuator arrangement (8) for adjusting at least part of the outlet mouth (7) in order to change the flow direction of the crop flow (3) by deflection.

2. The agricultural working machine according to claim 1, **characterized in that** the deflection mechanism (6) may be controlled by the operator assistance system (9) such that for distribution of the crops in the transport container (4) laterally to the drive direction (D) of the agricultural working machine (1), the change in flow direction (F₁, F₂) may comprise a deflection component (D_{L}) lateral to the drive direction (D) of the agricultural working machine (1).

3. The agricultural working machine according to claim 1 or 2, **characterized in that** in order to realize the deflection component (D_{D}) in the drive direction (D) the actuator arrangement (8) of the deflection mechanism (6) adjusts at least part of the outlet mouth (7) sidewise with respect to a vertical plane (V).

4. The agricultural working machine according to claim 2, **characterized in that** in order to realize the deflection component (D_{L}) lateral to the drive direction (D) the actuator arrangement (8) of the deflection mechanism (6) adjusts at least part of the outlet mouth (7) up or down with respect to a horizontal plane (H).

5. The agricultural working machine according to claim 2, **characterized in that** in order to realize both deflection components (D_{D}, D_{L}) the actuator arrangement (8) of the deflection mechanism (6) adjusts at least part of the outlet mouth (7) both sidewise and up or down.

6. The agricultural working machine according to one of the previous claims, **characterized in that** the outlet mouth (7) of the deflection mechanism (6) is adjustable on a, preferably predetermined, curved track.

7. The agricultural working machine according to one of the preceding claims, **characterized in that** the spout is pivotable, especially vertically and/or horizontally pivotable, and the pivoting of the spout (2) is controllable by the operator assistance system (9) during the transfer process.

8. The agricultural working machine according to one of the preceding claims, **characterized in that** a sensor arrangement (14) for detection of characteristic parameters of the transport vehicle (4) is provided.

9. The agricultural working machine according to claim 8, **characterized in that** the sensor arrangement (14) is a stereo camera and/or photonic mixer device and/or panorama image camera, and/or infrared scanner and/or laser scanner.

10. The agricultural working machine according to claim 7, **characterized in that** the pivoting of the spout (2) and the adjustment of the outlet mouth (7) by the actuator arrangement (8) of the deflection mechanism (6) is synchronized by the operator assistance system (9) during the transfer process.

11. The agricultural working machine according to one of the preceding claims, **characterized in that** the travel speed of the agricultural working machine (1) and/or the transport vehicle (5) is controllable by the operator assistance system (9) during the transfer process.

12. The agricultural working machine according to claim 7, **characterized in that** the pivoting of the spout (2) and the adjustment of the outlet mouth (7) by the actuator arrangement (8) of the deflection mechanism (6) is synchronized by the operator assistance system (9) during the transfer process together with the travel speed of the agricultural working machine (1) and/or the transport vehicle (5).

13. The agricultural working machine according to one of the preceding claims, **characterized in that** the agricultural working machine (1) is a harvester, especially a forage harvester or a combine harvester.

14. Method for transferring harvested crops from an agricultural working machine (1), preferably an agricultural working machine (1) as claimed in one of claims 1 to 14, to a transport container (4), preferably of a transport vehicle (5), in a side-by-side transfer process of the agricultural working machine (1) and the transport container (4),
wherein the crops are conveyed through a spout (2) and exit the spout (2) in a crop flow (3) through an outlet mouth (7) formed by a deflection mechanism (6) arranged at the distal end of the spout (2),
wherein the deflection mechanism (6) comprises an actuator arrangement (8) for adjusting at least part of the outlet mouth (7) in order to change the flow direction (F₁, F₂) of the crop flow (3) by deflection
and wherein the deflection mechanism (6) is controlled by an operator assistance system (9) such that for distribution of the crops in the transport container (4) along the drive direction (D) of the agricultural working machine (1) during a side-by-side transfer process of the agricultural working machine (1) and the transport container (4) the change in flow direction (F₁, F₂) comprises a deflection component (D_{D}) in drive direction of the agricultural working machine (1), **characterized in that** the deflection mechanism (6) comprises a first deflection unit (10) and a second deflection unit (12) which are arranged sequentially at the end of the spout (2) and which are adjustable by the actuator arrangement (8) for adjusting at least part of the outlet mouth (7) in order to change the flow direction of the crop flow (3) by deflection.

## Patentansprüche

1. Landwirtschaftliche Arbeitsmaschine, umfassend einen Abfluss (2) zum Befördern von Erntegut, das einen Erntegutstrom (3) bildet, in einem Transferprozess zu einem Transportbehälter (4), vorzugsweise eines Transportfahrzeugs (5), wobei der Abfluss (2) an seinem distalen Ende einen Ablenkungsmechanismus (6) umfasst, der einen Auslassmund (7) für den Erntegutstrom (3) bildet, und wobei der Ablenkungsmechanismus (6) eine Stellgliedanordnung (8) zum Verstellen von wenigstens einem Teil des Auslassmunds (7) umfasst, um die Strömungsrichtung (F₁, F₂) des Erntegutstroms durch Ablenkung zu verändern und wobei die landwirtschaftliche Arbeitsmaschine (1) ferner ein Bedienerunterstützungssystem (9) umfasst, das den Ablenkungsmechanismus (6) steuert,
wobei der Ablenkungsmechanismus (6) derart durch das Bedienerunterstützungssystem (9) gesteuert wird, dass zur Verteilung des Ernteguts in dem Transportbehälter (4) entlang der Antriebsrichtung (D) der landwirtschaftlichen Arbeitsmaschine (1) während eines Seite-an-Seite-Transferprozesses der landwirtschaftlichen Arbeitsmaschine (1) und des Transportbehälters (4) die Veränderung der Strömungsrichtung (F₁, F₂) eine Ablenkungskomponente (D_{D}) in Antriebsrichtung der landwirtschaftlichen Arbeitsmaschine (1) umfasst, **dadurch gekennzeichnet, dass** der Ablenkungsmechanismus (6) eine erste Ablenkungseinheit (10) und eine zweite Ablenkungseinheit (12) umfasst, die hintereinander am Ende des Abflusses (2) angeordnet sind und die durch die Stellgliedanordnung (8) zum Verstellen von wenigstens einem Teil des Auslassmunds (7) verstellbar sind, um die Strömungsrichtung des Erntegutstroms (3) durch Ablenkung zu verändern.

2. Landwirtschaftliche Arbeitsmaschine nach Anspruch 1, **dadurch gekennzeichnet, dass** der Ablenkungsmechanismus (6) derart durch das Bedienerunterstützungssystem (9) gesteuert werden kann, dass zur Verteilung des Ernteguts in dem Transportbehälter (4) seitlich zur Antriebsrichtung (D) der landwirtschaftlichen Arbeitsmaschine (1) die Veränderung der Strömungsrichtung (F₁, F₂) eine Ablenkungskomponente (D_{L}) seitlich zur Antriebsrichtung (D) der landwirtschaftlichen Arbeitsmaschine (1) umfassen kann.

3. Landwirtschaftliche Arbeitsmaschine nach Anspruch 1 oder 2, **dadurch gekennzeichnet, dass** zur Realisierung der Ablenkungskomponente (D_{D}) in der Antriebsrichtung (D) die Stellgliedanordnung (8) des Ablenkungsmechanismus (6) wenigstens einen Teil des Auslassmunds (7) seitwärts in Bezug auf eine vertikale Ebene (V) verstellt.

4. Landwirtschaftliche Arbeitsmaschine nach Anspruch 2, **dadurch gekennzeichnet, dass** zur Realisierung der Ablenkungskomponente (D_{L}) seitlich zur Antriebsrichtung (D) die Stellgliedanordnung (8) des Ablenkungsmechanismus (6) wenigstens einen Teil des Auslassmunds (7) nach oben oder unten in Bezug auf eine horizontale Ebene (H) verstellt.

5. Landwirtschaftliche Arbeitsmaschine nach Anspruch 2, **dadurch gekennzeichnet, dass** zur Realisierung beider Ablenkungskomponenten (D_{D}, D_{L}) die Stellgliedanordnung (8) des Ablenkungsmechanismus (6) wenigstens einen Teil des Auslassmunds (7) sowohl seitwärts als auch nach oben oder unten verstellt.

6. Landwirtschaftliche Arbeitsmaschine nach einem der vorhergehenden Ansprüche, **dadurch gekennzeichnet, dass** der Auslassmund (7) des Ablenkungsmechanismus (6) auf einer, vorzugsweise vorbestimmten, gekrümmten Bahn verstellbar ist.

7. Landwirtschaftliche Arbeitsmaschine nach einem der vorhergehenden Ansprüche, **dadurch gekennzeichnet, dass** der Abfluss schwenkbar, insbesondere vertikal und/oder horizontal schwenkbar, ist, und das Schwenken des Abflusses (2) während des Transferprozesses durch das Bedienerunterstützungssystem (9) steuerbar ist.

8. Landwirtschaftliche Arbeitsmaschine nach einem der vorhergehenden Ansprüche, **dadurch gekennzeichnet, dass** eine Sensoranordnung (14) zum Detektieren von charakteristischen Parametern des Transportfahrzeugs (4) vorgesehen ist.

9. Landwirtschaftliche Arbeitsmaschine nach Anspruch 8, **dadurch gekennzeichnet, dass** die Sensoranordnung (14) eine Stereokamera und/oder eine Photonenmischervorrichtung und/oder eine Panoramabildkamera und/oder ein Infrarotscanner und/oder ein Laserscanner ist.

10. Landwirtschaftliche Arbeitsmaschine nach Anspruch 7, **dadurch gekennzeichnet, dass** das Schwenken des Abflusses (2) und das Verstellen des Auslassmunds (7) durch die Stellgliedanordnung (8) des Ablenkungsmechanismus (6) durch das Bedienerunterstützungssystem (9) während des Transferprozesses synchronisiert wird.

11. Landwirtschaftliche Arbeitsmaschine nach einem der vorhergehenden Ansprüche, **dadurch gekennzeichnet, dass** die Fahrgeschwindigkeit der landwirtschaftlichen Arbeitsmaschine (1) und/oder des Transportfahrzeugs (5) durch das Bedienerunterstützungssystem (9) während des Transferprozesses steuerbar ist.

12. Landwirtschaftliche Arbeitsmaschine nach Anspruch 7, **dadurch gekennzeichnet, dass** das Schwenken des Abflusses (2) und das Verstellen des Auslassmunds (7) durch die Stellgliedanordnung (8) des Ablenkungsmechanismus (6) durch das Bedienerunterstützungssystem (9) während des Transferprozesses zusammen mit der Fahrgeschwindigkeit der landwirtschaftlichen Arbeitsmaschine (1) und/oder des Transportfahrzeugs (5) synchronisiert wird.

13. Landwirtschaftliche Arbeitsmaschine nach einem der vorhergehenden Ansprüche, **dadurch gekennzeichnet, dass** die landwirtschaftliche Arbeitsmaschine (1) eine Erntemaschine, insbesondere ein Mählader oder ein Mähdrescher, ist.

14. Verfahren zum Transferieren von Erntegut von einer landwirtschaftlichen Arbeitsmaschine (1), vorzugsweise einer landwirtschaftlichen Arbeitsmaschine (1) nach einem der Ansprüche 1 bis 14, zu einem Transportbehälter (4), vorzugsweise eines Transportfahrzeug (5), in einem Seite-an-Seite-Transferprozess der landwirtschaftlichen Arbeitsmaschine (1) und des Transportbehälters (4),
wobei das Erntegut durch einen Abfluss (2) befördert wird und aus dem Abfluss (2) in einem Erntegutstrom (3) durch einen Auslassmund (7) austritt, der durch einen Ablenkungsmechanismus (6) gebildet wird, der am distalen Ende des Abflusses (2) angeordnet ist,
wobei der Ablenkungsmechanismus (6) eine Stellgliedanordnung (8) zum Verstellen von wenigstens einem Teil des Auslassmunds (7) umfasst, um die Strömungsrichtung (F₁, F₂) des Erntegutstroms (3) durch Ablenkung zu verändern,
und wobei der Ablenkungsmechanismus (6) durch ein Bedienerunterstützungssystem (9) derart gesteuert wird, dass zur Verteilung des Ernteguts in dem Transportbehälter (4) entlang der Antriebsrichtung (D) der landwirtschaftlichen Arbeitsmaschine (1) während eines Seite-an-Seite-Transferprozesses der landwirtschaftlichen Arbeitsmaschine (1) und des Transportbehälters (4) die Veränderung der Strömungsrichtung (E₁, F₂) eine Ablenkungskomponente (D_{D}) in Antriebsrichtung der landwirtschaftlichen Arbeitsmaschine (1) umfasst, **dadurch gekennzeichnet, dass** der Ablenkungsmechanismus (6) eine erste Ablenkungseinheit (10) und eine zweite Ablenkungseinheit (12) umfasst, die hintereinander am Ende des Abflusses (2) angeordnet sind und die durch die Stellgliedanordnung (8) zum Verstellen von wenigstens einem Teil des Auslassmunds (7) verstellbar sind, um die Strömungsrichtung des Erntegutstroms (3) durch Ablenkung zu verändern.

## Revendications

1. Une machine de travail agricole comprenant une goulotte (2) pour convoyer du produit de récolte formant un flux de récolte (3) vers un conteneur de transport (4), de préférence vers un véhicule de transport (5) lors d'un processus de transfert, dans laquelle la goulotte (2) comprend à son extrémité distale un mécanisme de déflexion (6) formant une embouchure de sortie (7) pour le flux de récolte (3), et dans laquelle le mécanisme de déflexion (6) comprend un agencement d'actionneurs (8) pour régler au moins une partie de l'embouchure de sortie (7) afin de modifier la direction de flux (F₁, F₂) du flux de récolte par déflexion, et dans laquelle la machine de travail agricole (1) comprend également un système d'assistance d'opérateur (9) qui commande le mécanisme de déflexion (6), dans lequel le mécanisme de déflexion (6) est commandé par le système d'assistance d'opérateur (9) de façon que, pour répartir la récolte dans le conteneur de transport (4) suivant la direction de marche (D) de la machine de travail agricole (1) lors d'un processus de transfert côte à côte de la machine de travail agricole (1) et du conteneur de transport (4), le changement de direction de flux (F₁, F₂) comprenne une composante de déflexion (D_{D}) dans la direction de marche de la machine de travail agricole (1), **caractérisée en ce que** le mécanisme de déflexion (6) comprend une première unité de déflexion (10) et une seconde unité de déflexion (12) qui sont disposées séquentiellement à l'extrémité de la goulotte (2) et qui sont réglables par l'agencement d'actionneurs (8) pour régler au moins une partie de l'embouchure de sortie (7) afin de modifier la direction de flux du flux de récolte (3) par déflexion.

2. La machine de travail agricole selon la revendication 1, **caractérisée en ce que** le mécanisme de déflexion (6) peut être commandé par le système d'assistance d'opérateur (9) de façon que, pour répartir la récolte dans le conteneur de transport (4) latéralement à la direction de marche (D) de la machine de travail agricole (1), le changement de direction de flux (F₁, F₂) puisse comprendre une composante de déflexion (D_{L}) latérale à la direction de marche (D) de la machine de travail agricole (1).

3. La machine de travail agricole selon la revendication 1 ou 2, **caractérisée en ce qu'**afin de réaliser la composante de déflexion (D_{D}) dans la direction de marche (D), l'agencement d'actionneurs (8) du mécanisme de déflexion (6) règle au moins une partie de l'embouchure de sortie (7) latéralement par rapport à un plan vertical (V).

4. La machine de travail agricole selon la revendication 2, **caractérisée en ce qu'**afin de réaliser la composante de déflexion (D_{L}) latéralement à la direction de marche (D), l'agencement d'actionneurs (8) du mécanisme de déflexion (6) règle au moins une partie de l'embouchure de sortie (7) vers le haut ou vers le bas par rapport à un plan horizontal (H) .

5. La machine de travail agricole selon la revendication 2, **caractérisée en ce qu'**afin de réaliser les deux composantes de déflexion (D_{D}, D_{L}), l'agencement d'actionneurs (8) du mécanisme de déflexion (6) règle au moins une partie de l'embouchure de sortie (7) tant latéralement que vers le haut ou vers le bas.

6. La machine de travail agricole selon l'une des revendications précédentes, **caractérisée en ce que** l'embouchure de sortie (7) du mécanisme de déflexion (6) est réglable sur une trajectoire courbe, de préférence prédéterminée.

7. La machine de travail agricole selon l'une des revendications précédentes, **caractérisée en ce que** la goulotte est pivotante, en particulier pivotante verticalement et/ou horizontalement, et le pivotement de la goulotte (2) est commandable par le système d'assistance d'opérateur (9) lors du processus de transfert.

8. La machine de travail agricole selon l'une des revendications précédentes, **caractérisée en ce qu'**un agencement de capteurs (14) est prévu pour détecter des paramètres caractéristiques du véhicule de transport (4) .

9. La machine de travail agricole selon la revendication 8, **caractérisée en ce que** l'agencement de capteurs (14) est une caméra stéréo et/ou un dispositif mélangeur photonique et/ou une caméra panoramique et/ou un scanner infrarouge et/ou un scanner laser.

10. La machine de travail agricole selon la revendication 7, **caractérisée en ce que** le pivotement de la goulotte (2) et le réglage de l'embouchure de sortie (7) par l'agencement d'actionneurs (8) du mécanisme de déflexion (6) sont synchronisés par le système d'assistance d'opérateur (9) durant le processus de transfert.

11. La machine de travail agricole selon l'une des revendications précédentes, **caractérisée en ce que** la vitesse de marche de la machine de travail agricole (1) et/ou du véhicule de transport (5) peut être commandée par le système d'assistance d'opérateur (9) durant le processus de transfert.

12. La machine de travail agricole selon la revendication 7, **caractérisée en ce que** le pivotement de la goulotte (2) et le réglage de l'embouchure de sortie (7) par l'agencement d'actionneurs (8) du mécanisme de déflexion (6) sont synchronisés par le système d'assistance d'opérateur (9) lors du processus de transfert conjointement avec la vitesse de marche de la machine de travail agricole (1) et/ou du véhicule de transport (5).

13. La machine de travail agricole selon l'une des revendications précédentes, **caractérisée en ce que** la machine de travail agricole (1) est une machine de récolte, en particulier une ensileuse ou une moissonneuse-batteuse.

14. Procédé de transfert de produit de récolte depuis une machine de travail agricole (1), de préférence une machine de travail agricole (1) telle que revendiquée dans une des revendications 1 à 14, vers un conteneur de transport (4), de préférence un véhicule de transport (5), lors d'un processus de transfert côte à côte de la machine de travail agricole (1) et du conteneur de transport (4), dans laquelle la récolte est convoyée à travers une goulotte (2) et sort de la goulotte (2) en forme de flux de récolte (3) à travers une embouchure de sortie (7) formée par un mécanisme de déflexion (6) disposé à extrémité distale de la goulotte (2), dans laquelle le mécanisme de déflexion (6) comprend un agencement d'actionneurs (8) pour régler au moins une partie de l'embouchure de sortie (7) afin de modifier la direction de flux (F₁, F₂) du flux de récolte (3) par déflexion, et dans laquelle le mécanisme de déflexion (6) est commandé par un système d'assistance d'opérateur (9) de façon que, pour répartir la récolte dans le conteneur de transport (4) suivant la direction de marche (D) de la machine de travail agricole (1) lors d'un processus de transfert côte à côte de la machine de travail agricole (1) et du conteneur de transport (4), le changement de direction de flux (F₁, F₂) comprenne une composante de déflexion (D_{D}) dans la direction de marche de la machine de travail agricole (1), **caractérisée en ce que** le mécanisme de déflexion (6) comprend une première unité de déflexion (10) et une seconde unité de déflexion (12) qui sont disposées séquentiellement à l'extrémité de la goulotte (2) et qui sont réglables par l'agencement d'actionneurs (8) pour régler au moins une partie de l'embouchure de sortie (7) afin de modifier la direction de flux du flux de récolte (3) par déflexion.
